# EUROPÄISCHE PATENTANMELDUNG

(11) **EP 2 574 806 A1**
(43) Veröffentlichungstag der Anmeldung: **03.04.2013**
(21) Anmeldenummer: 11183507.0
(22) Anmeldetag: 30.09.2011
(51) Int. Cl.: F16C 35/067, F16H 57/023

(54) **Kupplungsbaugruppe mit Zentrierhilfe**

(71) Anmelder: GKN Driveline Köping AB, 731 36 Köping (SE)
(72) Erfinder: Nett, Hans-Peter, 53518 Adenau (DE); Göttert, Christoph, 50670 Köln (DE)
(74) Vertreter: Tersteegen, Felix

(57) **Zusammenfassung**

Die Erfindung betrifft eine Kupplungsbaugruppe mit einer in Bezug auf die Kupplungsvorrichtung antriebsseitigen und einer abtriebsseitigen Welle, deren rotatorische Entkopplung für den Betrieb bei geöffneter Kupplung unter anderem durch ein Drehlager gewährleistet ist, das in einem Überlappungsbereich der beiden Wellen zwischen diesen angeordnet ist.

Zur Minimierung der Gefahr einer Beschädigung eines Drehlagers bei der Montage, bei der die eine Welle durch einen Schlag in das Drehlager eingetrieben wird, ist eine Zentrierhilfe vorgesehen, die das Drehlager vor außermittiger Belastung bei der Montage schützt.

## Beschreibung

Die Erfindung betrifft eine Kupplungsbaugruppe eines Kraftfahrzeugs für die Weiterleitung von Antriebsleistung des Kraftfahrzeugs auf ein Antriebsrad einer Achse über Wellen des Antriebsstrangs, insbesondere eine Kupplungsbaugruppe für den Einsatz bei einer kupplungsgesteuerten Ausgleichseinheit, mit einer schaltbaren Kupplungseinrichtung, die Antriebsleistung von einer in Bezug auf die Kupplungsvorrichtung antriebsseitigen Welle auf eine in Bezug auf die Kupplungsvorrichtung abtriebsseitigen Welle zu übertragen vermag, wobei das antriebsseitige Welle und die abtriebsseitige Welle unter Zwischenschaltung eines Drehlagers ineinander greifen, nachdem sie bei der vorhergehenden Montage einander überlappend ineinander geschoben wurden.

Eine Kupplungsbaugruppe dieser Art ist aus der EP 2 116 411 A1 bekannt. In einer differentiallosen oder differentialbehafteten, kupplungsgesteuerten Ausgleichseinheit ist für eine Seitenwelle, die die in Bezug auf die Kupplungsvorrichtung abtriebsseitige Welle bildet, eine Kupplungsbaugruppe mit einer ansteuerbaren Lamellenkupplung vorgesehen, über die die Antriebsleistung dem angeschlossenen Antriebsrad eines Kraftfahrzeugs zugeleitet wird. Die Seitenwelle wird von einer Tellerradträgerwelle, die die in Bezug auf die Kupplungsvorrichtung antriebsseitige Welle bildet, über den Umweg über die Kupplungsvorrichtung angetrieben. Wenn Seitenwelle und Tellerradträgerwelle überlappend ineinander geschoben sind, ist in dem Überlappungsbereich ein zwischen den beiden Wellen angeordnetes Drehlager vorgesehen. Dieses zentriert die beiden Wellen zueinander, stellt deren Verdrehbarkeit zueinander sicher und stützt auftretende Kräfte und Momente teilweise ab.

Bei der Montage werden die Wellen durch Ausübung eines Schlags auf eine der Wellen ineinander geschoben, insbesondere wird die eine Welle in das an der anderen Welle bereits angeordnete Drehlager eingeschlagen. Bei der Ausübung des Schlags besteht die Gefahr, dass die Wellen noch nicht zueinander - und damit insbesondere nicht gegenüber dem Drehlager - zentriert sind und der Schlag durch einen freien, sich lediglich an den Wälzkörpern des Drehlagers abstützenden Lagerring aufgefangen wird. Das Wellenende wird in der Folge nicht in den Lagerinnenring oder über den Lageraußenring getrieben, stattdessen ist der Schlag gegebenenfalls mehrfach zu wiederholen, bis die gewünschte Verbindung hergestellt ist. Nicht nur droht das Lager beschädigt zu werden, auch die Montage wird verkompliziert.

Aufgabe der Erfindung ist es daher, die Montage einer Kupplungsbaugruppe der eingangs genannten Art zu vereinfachen und Gefahr einer Beschädigung des Lagers bei der Montage zu minimieren.

Diese Aufgabe wird nach der Erfindung dadurch gelöst, dass eine Zentrierhilfe vorgesehen ist, die die Wellen bei der Montage relativ zum Drehlager zu zentrieren vermag.

Eine solche Zentrierhilfe hat mehrere vorteilhafte Effekte. Sie gewährleistet eine Vorzentrierung der betroffenen Wellen zueinander vor der Ausübung des für die Montage erforderlichen Schlags auf eine der Wellen. Sie ermöglicht außerdem, dass ein auf die eine Welle gegebener Schlag dann, wenn die Wellen nicht zueinander zentriert sind, von der Zentrierhilfe aufgefangen und nicht auf einen freien Lagerring übertragen wird.

Sofern von "Wellen" oder "Antriebswellen" die Rede ist, sei angemerkt, dass hiermit grundsätzlich jegliche Antriebsglieder des Antriebsstrangs gemeint sind, die unter Zwischenschaltung eines Drehlagers ineinander greifen, nachdem sie bei der vorhergehenden Montage einander überlappend ineinander geschoben wurden. Es muss sich nicht um zylindrische, längliche Bauteile handeln.

Für die Kupplungsbaugruppe ist daher bevorzugt vorgesehen, dass die abtriebsseitige Welle bei der Montage in einer Montagerichtung auf die antriebsseitige Welle aufgeschoben oder in die antriebsseitige Welle eingeschoben ist und die antriebsseitige Welle und die abtriebsseitige Welle einen Überlappungsbereich zur Aufnahme des Drehlagers ausbilden, wobei die Zentrierhilfe in Montagerichtung gesehen vor dem Drehlager angeordnet ist.

Die Zentrierhilfe ist vorteilhaft von einem Zentrierring gebildet. Die Zentrierhilfe, insbesondere also der Zentrierring, ist bevorzugt als ein vom Drehlager getrenntes Bauteil ausgebildet. Dies ermöglicht die Fertigung und Montage der Zentrierhilfe als konstruktiv einfach ausgebildetes Zusatzbauteil, das unabhängig vom Drehlager vor der Montage an einer der Wellen vormontiert werden kann.

Bevorzugt ist die Zentrierhilfe von einem Zentrierring mit einem T- oder L-förmigen Querschnitt gebildet. Damit bildet die Zentrierhilfe im Querschnitt in axialer Richtung einen Stützabschnitt, der - in grundsätzlich gleicher Ausrichtung wie ein Lagerring - innenseitig oder außenseitig vor der Montage auf einer der Wellen angeordnet wird. Der Querschnitt der Zentrierhilfe bildet damit außerdem einen vom Stützabschnitt radial nach innen oder außen abgehenden Zentrierabschnitt aus, der von dem Drehlager axial beabstandet ist und eine darauf auftreffende Schlagwirkung auf den Stützabschnitt ableitet und auf die Welle überträgt. Der vor der Montage noch freie Lagerring des Drehlagers wird in der Folge bei mit Blick auf die beabsichtigte Montage fehlerhaft angesetzter abtriebsseitiger Welle gar nicht belastet oder bei richtig zentriert angesetzter Welle in dem minimal möglichen Maß. Vorteilhaft ist weiter vorgesehen, dass die Zentrierhilfe sich gegen einen vor der Montage bereits fixierten Lagerring des Drehlagers abstützt. Der Lagerring leitet die durch den Schlag verursachten Stoßkräfte dann in die Welle weiter, ohne dass die Stoßkräfte nennenswert auf die Wälzkörper oder auf den freien Lagerring einwirken würden.

Als Gegenstand der Erfindung wird auch die Verwendung einer Zentrierhilfe wie vorstehend und nachstehend beschrieben bei einer Kupplungsbaugruppe angesehen, die Teil einer differentiallosen oder differentialbehafteten kupplungsgesteuerten Ausgleichseinheit bildet, bei der die rotatorische Entkopplung der antriebsseitigen und abtriebsseitigen Welle für den Betrieb mit geöffneter Kupplung erforderlich ist. Mit einer solchen Ausgleichseinheit werden insbesondere auch Fahrzeuge ausgestattet, die über eine kupplungsgesteuerte, differentiallose Ausgleichseinheit anstelle eines herkömmlichen Differentials verfügen, und/oder solche, bei denen im sogenannten Disconnect-Betrieb eine nur wahlweise in den Antriebsleistungsfluss zuschaltbare Sekundärachse für den wahlweisen Betrieb des Fahrzeugs mit Allradantrieb vorgesehen ist.

Damit dient die Zentrierhilfe auch als Montagehilfe zur Zentrierung einer in Bezug auf eine Kupplungsvorrichtung antriebsseitigen Welle und einer in Bezug auf die Kupplungsvorrichtung abtriebsseitigen Welle zueinander bzw. zu einem an einer der beiden Wellen angeordneten Drehlager sowie zum Schutz des Drehlagers bei einer Montage, bei der eine der beiden Wellen durch Schlagwirkung in oder auf ein an der anderen Welle vormontiertes Drehlager getrieben wird.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine Teilansicht einer Kupplungsbaugruppe im Schnitt und
- Fig. 2: Einzelheit A aus Figur 1.

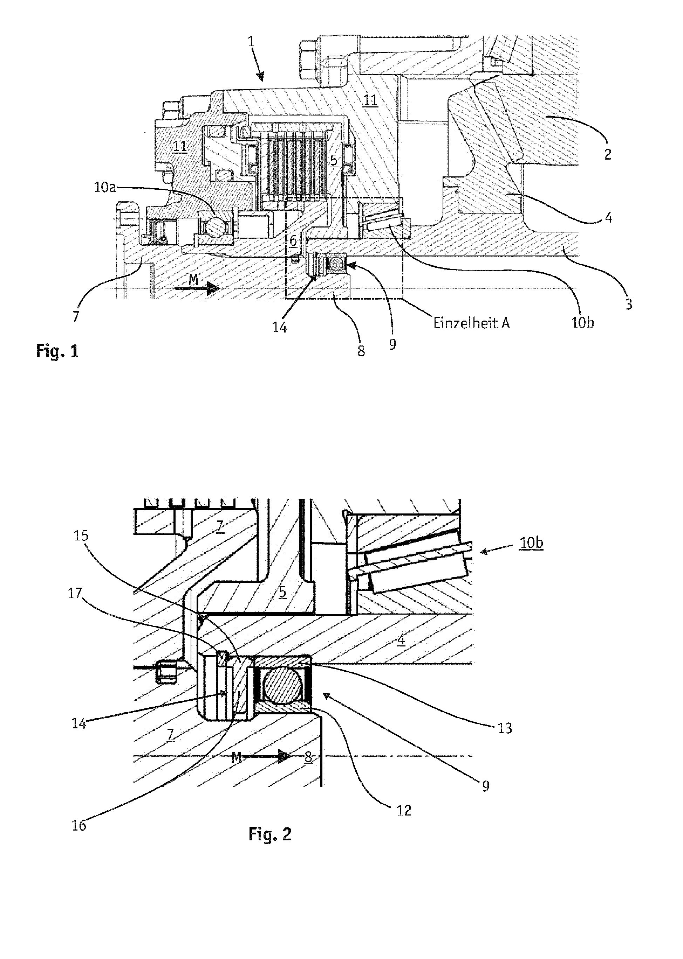

In Figur 1 ist eine Kupplungsbaugruppe mit einer Kupplungsvorrichtung 1 gezeigt, die Teil einer Getriebebaugruppe ist. Die in Figur 1 dargestellte Getriebebaugruppe ist eine kupplungsgesteuerte Ausgleichseinheit, für die sich die erfindungsgemäße Ausgestaltung der Kupplungsbaugruppe in besonderem Maße empfiehlt.

Über ein von einer Kardanwelle (nicht gezeigt) angetriebenes Kegelrad 2 wird in an sich bekannter Weise über ein auf einer Zwischenwelle 3 angeordnetes Tellerrad 4 angetrieben. Der zur Kupplungsvorrichtung 1 gehörende Außenlamellenträger 5, der die Eingangsseite der Kupplung darstellt, ist drehfest mit der Zwischenwelle 3 verbunden. Der Außenlammellenträger 5 überträgt die Antriebsleistung über die Außenlamellen der als Lamellenkupplung ausgebildeten Kupplungsvorrichtung bei geschlossener Kupplung auf die Innenlamellen, über die die Antriebsleistung auf den Innenlamellenträger 6 weitergeleitet wird. Dieser ist wiederum mit einer Seitenwelle 7 drehfest verbunden, über die die Antriebsleistung, gegebenenfalls unter Zwischenschaltung weiterer Elemente, auf die Antriebsräder weitergeleitet wird. Bei geöffneter Kupplung werden keine Kräfte übertragen.

Die Zwischenwelle 3 oder ist demnach in Leistungsflussrichtung gesehen in Bezug auf die Kupplungsvorrichtung 1 die antriebsseitige Welle, die Seitenwelle 7 ist demnach in Bezug auf die Kupplungsvorrichtung 1 die abtriebsseitige Welle.

Es ist erkennbar, dass die Seitenwelle 7 mit ihrem einen Wellenende unter Ausbildung eines Überlappungsbereichs in die Zwischenwelle 3 hineinragt. Der an diesem Wellenende angeordnete Lagerzapfen 8 durchdringt ein Drehlager 9. Dieses Drehlager 9 ist im Verhältnis zu den Hauptlagern 10a und 10b, die unter anderem die auf die Seitenwelle 7 im Fahrbetrieb ausgeübten hohen Kräfte und Momente im Gehäuse 11 abstützen, deutlich kleiner ausgeführt. Das Drehlager dient als Pilotlager, das heißt es zentriert Seitenwelle 7 und Zwischenwelle 3 zueinander, gewährleistet deren freies Drehen bei geöffneter Kupplung und stützt die fast ausschließlich radial wirkenden Kräfte ab, die infolge der Querkraftbelastung der Seitenwelle 7 entstehen. Es ist aufgrund seiner Größe und Auslegung nur für geringe Belastung ausgelegt und daher besonders anfällig gegen stoßartige, axiale Belastungen. Die geringe Größe ist auch darauf zurückzuführen, dass man die Reibungsverluste des Lagers gering halten will.

Um das Eindringen der Seitenwelle 7 in die Verzahnung des Innenlamellenträgers 6 bzw. in den Innenring 12 des Drehlagers 9 bei der Montage zu ermöglichen, sind bei der Montage Schläge auf die Seitenwelle 7 auszuüben, die den Lagerzapfen in axialer Richtung, also in Montagerichtung M, in das Drehlager 9 hineintreiben. Dabei besteht die Gefahr, dass der am Wellenende der abtriebsseitigen Welle angeordnete Wellenzapfen den Innenring 12 des Drehlagers 9 außermittig mit Stößen belastet, wenn die abtriebsseitige Welle nicht vollkommen zentriert zum Innenring 12 des Drehlagers ausgerichtet ist. Das als eher empfindliches Pilotlager ausgebildete Drehlager 9 kann dabei beschädigt werden.

Um die Gefahr einer solchen Beschädigung zu minimieren, ist eine Zentrierhilfe in Form eines Zentrierrings 14 vorgesehen. Der Zentrierring hat einen im Wesentlichen T-förmigen Querschnitt, der einen Stützabschnitt 15 und einen Zentrierabschnitt 16 ausbildet. Der Stützabschnitt 15 liegt wie der Außenring 13 des Drehlagers 9 innenseitig an der antriebsseitigen Zwischenwelle 3 an, der Zentrierabschnitt 16 ragt vom Stützabschnitt 15 ausgehend radial nach innen. Selbstverständlich können anstelle eines T-förmigen Querschnitts auch andere Querschnittsformen wie ein L-förmiger Querschnitt sinnvoll verwendet werden. Relevant ist lediglich, dass die Zentrierhilfe einen Stützabschnitt aufweist, über den die bei der Montage gegen Zentrierabschnitt ausgeübten Kräfte bzw. Stöße unter Umgehung des freien Lagerrings und/oder der Wälzkörper weitergeleitet werden.

Ein zwecks Montage der Kupplungsbaugruppe auf die abtriebsseitige Welle ausgeübter Schlag führt nun dazu, dass die Schlagwirkung dann, wenn der Wellenzapfen der abtriebsseitigen Welle sich auch nur geringfügig außermittig zum Innenring 12 des Drehlagers 9 befindet, von der in Montagerichtung M gesehen vor dem Drehlager 9 befindlichen Zentrierhilfe 14 abgefangen wird. Die Stosskräfte werden über den Zentrierabschnitt 16 des Zentrierrings 14 auf den Stützabschnitt 15 weitergleitet und von dort über den Außenring 13 in die antriebsseitige Welle übertragen. Der Innenring 12 des Drehlagers 9 und dessen Wälzkörper werden bei der Montage also nur dann in axialer Richtung belastet, wenn die abtriebsseitige Welle nach vorherigem Durchtritt durch die Zentrierhilfe 14 gegenüber dem Drehlager zentriert ist. Das Drehlager 9 ist damit wirksam vor Stößen geschützt und wird bei der Montage nur so gering wie möglich belastet.

Der Wellenzapfen der abtriebsseitigen Welle weist, wie in Figur 2 anschaulich zu erkennen, einen Freistich auf, in den der innere Rand des Zentrierabschnitts 16 bei korrektem Sitz der Seitenwelle 7 weist. Dies gewährleistet, dass die abtriebsseitige Welle nach bestimmungsgemäßer Montage und Durchtitt durch die Zentrierhilfe 14 ungehindert von der Zentrierhilfe 14 drehen kann.

Die Zentrierhilfe 14 ist vormontiert und bevorzugt über ein Sicherungselement 17 gegen ein Verrutschen in axialer Richtung gesichert. Das beispielhaft als Sicherungsring ausgebildete Sicherungselement 17 hält über die Zentrierhilfe außerdem das schon vor der Montage der abtriebsseitigen Welle in der antriebsseitigen Welle vormontierte Drehlager 9 in Position.

Die Figuren zeigen eine Ausgestaltung, bei der die abtriebsseitige Welle (Seitenwelle 7) in die antriebsseitige Welle (Zwischenwelle 3) hineinragt und den vor der Montage freien Innenring des Drehlagers 9 durchstößt, während der Außenring des Drehlagers 9 innenseitig in der Zwischenwelle 3 gehalten ist. Selbstverständlich ist grundsätzlich auch die umgekehrte Ausgestaltung denkbar, bei der die abtriebsseitige Welle die antriebsseitige Welle nach der Montage außenseitig überlappt, wobei der Innenring des Drehlagers außenseitig auf der Zwischenwelle vormontiert ist und die abtriebsseitige Welle über den bei der Montage noch freien Außenring geschoben werden muss. Weiter ist es natürlich denkbar, dass die zur bestimmungsgemäßen Montage erforderliche Schlagwirkung je nach Art der Kupplungsbaugruppe und deren spezifischer Konstruktion nicht auf die abtriebsseitige sondern auf die antriebsseitige Welle ausgeübt wird und das Drehlager an der abtriebsseitigen Welle vormontiert ist.

Durch die Erfindung ist ein effektiver Schutz eines klein und reibungsarm ausgelegten Drehlagers bei der Montage einer Kupplungsbaugruppe geschaffen, die eine in Bezug auf die Kupplungsvorrichtung antriebsseitige und eine in Bezug auf die Kupplung abtriebsseitige Welle aufweist, deren rotatorische Entkopplung für den Betrieb bei geöffneter Kupplung unter anderem durch das Drehlager gewährleistet ist, das in einem Überlappungsbereich der beiden Wellen zwischen diesen angeordnet ist. Wenn eine der Wellen durch einen Schlag in das Drehlager eingetrieben wird, schützt die Zentrierhilfe das Drehlager vor außermittiger Belastung bei der Montage.

### Bezugszeichentiste

- 1: Kupplungsvorrichtung
- 2: Kegelrad
- 3: Zwischenwelle
- 4: Tellerrad
- 5: Außenlamellenträger
- 6: Innenlamellenträger
- 7: Seitenwelle
- 8: Lagerzapfen
- 9: Drehlager
- 10a: Hauptlager Seitenwelle
- 10b: Hauptlager Zwischenwelle
- 11: Gehäuse
- 12: Innenring des Drehlagers
- 13: Außenring des Drehlagers
- 14: Zentrierhilfe, Zentrierring
- 15: Stützabschnitt
- 16: Zentrierabschnitt
- 17: Sicherungselement

- M: Montagerichtung

## Patentansprüche

1. Kupplungsbaugruppe eines Kraftfahrzeugs für die Weiterleitung von Antriebsleistung des Kraftfahrzeugs auf ein Rad einer Achse mit einer schaltbaren Kupplungseinrichtung (1), die Antriebsleistung von einer in Bezug auf die Kupplungsvorrichtung (1) antriebsseitigen Welle (3) auf eine in Bezug auf die Kupplungsvorrichtung (1) abtriebsseitigen Welle (7) zu übertragen vermag, wobei die antriebsseitige Welle (7) und die abtriebsseitige Welle (3) unter Zwischenschaltung eines Drehlagers (9) ineinander greifen, **dadurch gekennzeichnet, dass** eine Zentrierhilfe (14) vorgesehen ist, die die Wellen (3, 7) bei der Montage relativ zum Drehlager (9) zu zentrieren vermag.

2. Kupplungsbaugruppe nach Anspruch 1, **dadurch gekennzeichnet, dass** die abtriebsseitige Welle (7) bei der Montage in einer Montagerichtung M auf die antriebsseitige Welle (3) aufgeschoben oder in die antriebsseitige Welle (3) eingeschoben ist und die antriebsseitige Welle (3) und die abtriebsseitige Welle (7) einen Überlappungsbereich, in dem das Drehlager (9) angeordnet ist, ausbilden, wobei die Zentrierhilfe (14) in Montagerichtung M gesehen vor dem Drehlager angeordnet ist.

3. Kupplungsbaugruppe nach einem der beiden vorhergehenden Ansprüche, **dadurch gekennzeichnet, dass** die Zentrierhilfe (14) von einem Zentrierring gebildet ist.

4. Kupplungsbaugruppe nach einem der vorhergehenden Ansprüche, **dadurch gekennzeichnet, dass** die Zentrierhilfe (14) als ein vom Drehlager (9) getrenntes Bauteil ausgebildet ist.

5. Kupplungsbaugruppe nach einem der vorhergehenden Ansprüche, **dadurch gekennzeichnet, dass** die Zentrierhilfe (14) von einem Zentrierring mit einem T-oder L-förmigen Querschnitt gebildet ist.

6. Kupplungsbaugruppe nach einem der vorhergehenden Ansprüche, **dadurch gekennzeichnet, dass** die Zentrierhilfe (14) sich gegen einen Lagerring des Drehlagers (9) abstützt.

7. Verwendung einer Zentrierhilfe (14) für eine Kupplungsbaugruppe nach einem der vorhergehenden Ansprüche zur Zentrierung einer in Bezug auf eine Kupplungsvorrichtung (1) antriebsseitigen Welle (3) und einer in Bezug auf die Kupplungsvorrichtung (1) abtriebsseitigen Welle (7) sowie zum Schutz eines Drehlagers (9) bei einer Montage, bei der eine der beiden Wellen durch Schlagwirkung in oder auf ein an der anderen Welle vormontiertes Drehlager getrieben wird.
